# EUROPEAN PATENT SPECIFICATION

(11) **EP 4 353 080 B1**
(45) Date of publication and mention of the grant of the patent: **29.10.2025**
(21) Application number: 23806793.8
(22) Date of filing: 11.05.2023
(51) Int. Cl.: A01K 61/10, A01K 61/60, A01K 61/80, A01K 61/95, A01K 63/00, A01K 63/02, B63B 1/12, B63B 11/00, B63B 35/24

(54) **CATAMARAN FOR DEEP AND FAR SEA CULTURE**
KATAMARAN FÜR TIEF- UND TIEFSEEKULTUR
CATAMARAN POUR CULTURE EN MER PROFONDE ET LOINTAINE

(30) Priority: 20.05.2022 CN 202210558255
(43) Date of publication of application: 17.04.2024
(73) Proprietor: Qingdao Blue Granary Marine Fishery Development Co., Ltd., Qingdao, Shandong 266000 (CN); Qingdao Blue Granary Marine Engineering Technology Co., Ltd., Qingdao, Shandong 266000 (CN)
(72) Inventor: LEI, Dong, Qingdao, Shandong 266000 (CN)
(74) Representative: Bayramoglu et al.
(86) International application number: PCT/CN2023/093365
(87) International publication number: WO 2023/221841

(56) References cited:
- EP-B1- 2 846 630
- WO-A1-2019/221607
- CN-A- 109 757 415
- CN-A- 112 021 240
- CN-A- 112 021 240
- CN-A- 112 219 764
- CN-A- 112 660 312
- CN-A- 114 747 517
- CN-A- 114 847 205
- GB-A- 711 283

## Description

### BACKGROUND OF THE INVENTION

### 1. Technical Field

The invention relates to a dual-hull vessel for implementing aquaculture in deep-sea and far-sea areas, belonging to the fields of aquaculture and marine engineering.

### 2. Description of Related Art

With the continuous development of large-scale deep-sea and far-sea aquaculture facilities and technology, especially the increasing application of aquaculture vessels in the deep-sea and far-sea aquaculture industry, there is a prominent emphasis on optimizing ship design, increasing the water volume of the vessels, enhancing the level of automation and aquaculture efficiency, as well as reducing aquaculture costs, among various directions for industry development.

Currently, hull structures of existing large-scale aquaculture vessels generally follow a traditional bulk carrier design and adopt a closed tank aquaculture mode, which leads to high unit aquaculture water costs and aquaculture expenses. To reduce costs and aquaculture expenses, a common method is to use net cages, but net cage aquaculture has the disadvantage of poor maneuverability.

For example, as described in CN 112 021 240 A a first hull and a second hull are arranged opposite to each other on the sides of the vessel to provide primary buoyancy, and several lifting-type net cages are positioned between the first hull and the second hull and connected to both hulls. Closed-loop factory culture of small fish is conducted in the two hulls, and wild culture of large-size adult fish is successively conducted in the lifting-type net cages. This application integrates closed and open type culture methods to achieve marine wild culture from small fry to adult fish, thus reducing the environmental pressure of land or nearshore net cage culture and lowering the cost of transporting large-size fish at sea. Compared to fully closed culture, this application uses low-density open type wild culture in the later stages of the culture process.

However, the aforementioned prior art of using the two-stage aquaculture vessel and aquaculture process, where small fry are placed in the closed first and second hulls for aquaculture and larger-sized fish are cultured in the lifting-type net cages between the two hulls, has the following drawbacks and limitations. Firstly, during the sorting of aquaculture fish and the harvesting of adult fish, there are difficulties in directing the transfer of fish between the hulls and the net cages. The use of traditional fish suction pump devices can cause significant damage to larger-sized fish, resulting in a diminished visual appeal and reduced product quality of the fish. Secondly, the choice of feeding systems has always been a key technical difficulty in deep-sea and far-sea aquaculture, but the aforementioned prior art does not provide a clear and comprehensive solution. Thirdly, the fixed connection of the net cages creates significant water resistance during the traveling of the dual-hull vessel, thus increasing the energy consumption for vessel transportation. Additionally, in adverse weather and sea conditions, it is more susceptible to causing fish mortality or disease within the net cages.

**In** view of this, the present application is proposed.

### BRIEF SUMMARY OF THE INVENTION

The present invention discloses a deep-sea and far-sea aquaculture dual-hull vessel to solve the problems in the prior art, which is a novel dual-hull vessel with immersed vertical lifting-type culture tanks and a top movable feeding system. By utilizing a transfer system between a cabin of the dual-hull vessel and the culture tanks, along with a water level differential control method, the transport and transfer flexibility is enhanced for deep-sea and far-sea aquaculture, the cost of vessel-based aquaculture is effectively reduced, and net cages have mobility and the capability to leave the water surface.

To achieve the above design objectives, the deep-sea and far-sea aquaculture dual-hull vessel comprises hull components on two sides, culture tanks located between the hull components in a suspended connection manner, and a sorter connecting the hull components with the culture tanks and directionally transferring cultured fish from the hull components to the culture tanks. A mobile lifting mechanism is arranged between the tops of the hull components on two sides, the mobile lifting mechanism comprises a lifting component, and a longitudinal moving component and a transverse moving component distributed along the hulls on two sides, and the longitudinal moving component has an H-shaped frame bottom structure. A biofiltration device for circulating water with the external sea area is arranged in the hull component.

**The** deep-sea and far-sea aquaculture dual-hull vessel further comprises a plurality of movable pulley components; the culture tank is composed of an upper space and a lower space which are linked, and the top of the upper space is connected with the plurality of movable pulley components. The upper space is provided with culture tank fish inlets and culture tank fish outlets facing the sides of the hulls on two sides. An outer side wall of the upper space and an inner side wall of the lower space are in clearance fit; at a maximum extended position of the culture tank, an upper end face of an outer boss fixedly connected to the upper space contacts and is fixedly connected to a lower end face of an inner boss of the lower space; when vertically shortened to a minimum height of the culture tank, a bottom surface of the upper space is in contact with an inner bottom surface of the lower space, and at this point, a first hole of the lower space and a third hole of the upper space are concentric. A plurality of enclosed and isolated compartments are arranged in the hull component, a partition frame is arranged between the tops of the hull components on two sides, and the partition frame has a plurality of upward-opening notches. A side, facing the culture tank, of the hull component is provided with cabin fish outlets and cabin fish inlets arranged horizontally, and both the cabin fish outlet and the cabin fish inlet penetrate through the partition frame. Fish collecting devices are arranged at the bottom of each compartment of the hull component and the bottom of each culture tank, wherein the fish collecting device comprises a first fish driving frame and a second fish driving frame, the bottom of the compartment is provided with the first fish driving frame and the bottom of the lower space is provided with the second fish driving frame. The transfer of cultured fish is realized by the water level difference between the compartment and the culture tank. The deep-sea and far-sea aquaculture dual-hull vessel further comprises a water pump; when the cultured fish are transferred from the hull to the culture tank, the cabin fish outlets communicate with the culture tank fish inlets, seawater outside the vessel is injected into the hull by using the water pump, so that the water level in the cabin is higher than the external seawater, and the first fish driving frame at the bottom of the compartment rises to concentrate the cultured fish at the upper part of the hull and transfer the cultured fish to the culture tank; and when the cultured fish are transferred from the culture tank to the hull, the cabin fish inlets communicate with the culture tank fish outlets, the seawater in the hull is pumped out by the water pump to make the water level in the cabin lower than the external seawater, and the second fish driving frame at the bottom of the culture tank rises to concentrate the cultured fish at the upper part of the culture tank and transfer the cultured fish to the compartment.

Further, preferably, a plurality of feed bins are arranged on a top deck of the hull component, the feed bin is composed of a bracket, a bin body, a hook, a discharge port and a valve, and the discharge port is arranged at the bottom of the bin body and controlled by the valve to be opened and closed.

Further, preferably, a longitudinal guide rail is arranged at the top of the hull component on each side, and a first rack is arranged along the longitudinal guide rail; the longitudinal moving component comprises a first motor, a first guide groove at the bottom, and a transverse guide rail fixedly connected to the side; a second rack is fixedly connected to the side of the transverse guide rail; a first gear is in driving connection with an output shaft of the first motor, the first gear meshes with the first rack, and the first guide groove is slidably connected with the longitudinal guide rail; the transverse moving component comprises a second motor, a plurality of groups of vertically arranged first guide sleeves, and a second guide groove at the bottom; the first guide sleeve is vertically connected to the lifting component above, the second guide groove is slidably connected to the transverse guide rail of the longitudinal moving component, a second gear is in driving connection with an output shaft of the second motor, and the second gear meshes with the second rack; the lifting component comprises a lifting frame and a third motor, a plurality of groups of guide columns are arranged at the bottom of the lifting frame, and two groups of guide rods are fixedly connected inside the lifting frame; two ends of a left slide bar and a right slide bar are each fixedly connected with a sliding sleeve, and the sliding sleeves are slidably connected with the guide rods; a bidirectional screw is fixedly connected with an output shaft of the third motor, the bidirectional screw penetrates through the left slide bar and the right slide bar in a threaded connection manner, and two ends of the bidirectional screw are symmetrically provided with a right-handed thread and a left-handed thread respectively; an electric hoist is connected to each sliding sleeve, and the electric hoist is connected with a pulling plate below through a first steel cable; a plurality of fourth motors are connected to the lifting frame, output shafts of the fourth motors are fixedly connected with a lifting screw, and the lifting screw is threadedly connected with a lifting nut of the transverse moving component; and a plurality of groups of telescopic rods are sequentially nested and connected along an axial center line of the first guide sleeve, and the top of each telescopic rod is fixedly connected with the corresponding guide column.

Further, preferably, the movable pulley component is provided with a cable hook on a cable bracket, and a second steel cable is wound around a pulley, with one end fixedly connected to a fixing plate and the other end fixedly connected to a cable head; a pulley shaft fixedly connected to the pulley is sleeved in a cable bracket hole of the cable bracket, and the pulley is rotatably connected with the pulley shaft; and the cable head is fixedly connected with the upper space, and the second steel cable is fixedly connected with the lower space.

Further, preferably, the second fish driving frame is arranged on an inner bottom surface of the lower space, a plurality of second hooks are connected to the second fish driving frame through second rods, and the second hooks extend out and are located above the top of the upper space; the first fish driving frame (an upper surface of which is covered with a fishing net) arranged at the bottom of each compartment is vertically connected with first hooks above through first rods, and the first hooks extend out and are located on the top deck of the hull component; and an inner side of the upper space, an outer side of the lower space, and upper surfaces of the first fish driving frame and the second fish driving frame are all covered with fishing nets.

Further, preferably, one end of the sorter is connected with the cabin fish outlets, and the other end is connected with the culture tank fish inlets; and the sorter has a plurality of sorting ports.

To sum up, the deep-sea and far-sea aquaculture dual-hull vessel has the following advantages.

1. This application realizes a system and method for immersed deep-sea and far-sea aquaculture of many kinds of fish outside the hull. An improved open type culture mode making full use of the deep-sea and far-sea water environment is proposed, truly achieving aquaculture from small fry to adult fish in the wild sea environment.

2. Compared with the prior art where open type net cage aquaculture is only adopted for larger fish in the later stages, this application adopts low-density open type wild aquaculture throughout the entire culture cycle, significantly improving the quality of aquaculture products and realizing higher economic value.

3. Based on the transfer system and water level difference control between the dual-hull vessel and the culture tanks, more precise entry and exit control and size sorting operations are achieved. This is beneficial for the protection of larger fish and improving the survival rate, while also enhancing the quality of aquaculture products.

4. The vessel-mounted gantry crane is used for feeding control, realizing mixed culture of various aquatic organisms, and improving the refinement of aquaculture techniques and production yield.

5. The vessel-mounted gantry crane is used to control the movement and lifting of the immersed culture tanks. By extending or retracting the culture tanks and lifting the culture tanks to the deck and/or the front of the hull, the culture tanks can be separated from the water surface for easy transport and maintenance of the dual-hull vessel, which helps reduce water resistance encountered during the traveling of the dual-hull vessel, protects the culture tanks, and facilitates culture tank maintenance.

6. The design proposed in this application significantly improves the level of intelligence and automation in the feeding, harvesting, sorting, and cleaning stages of deep-sea and far-sea aquaculture.

### BRIEF DESCRIPTION OF THE SEVERAL VIEWS OF THE DRAWINGS

The scheme of this application will be further explained below with reference to the attached drawings.
Fig. 1 is a structural diagram of a deep-sea and far-sea aquaculture dual-hull vessel according to this application;
Fig. 2 is an enlarged view of part A in Fig. 1;
Fig. 3 is an enlarged view of part B in Fig. 1;
Fig. 4 is a front view of a hull structure shown in Fig. 1;
Fig. 5 is an enlarged view of part C in Fig. 4;
Fig. 6 is an enlarged view of part D in Fig. 4;
Fig. 7 is a side view of a hull structure shown in Fig. 1;
Fig. 8 is a structural diagram of a feed bin;
Fig. 9 is an isometric view of part of a hull shown in Fig. 1;
Fig. 10 is an enlarged view of part E in Fig. 9;
Fig. 11 is an enlarged view of part F in Fig. 9;
Fig. 12 is a diagram showing that a culture tank is moved to the front of a hull;
Fig. 13 is an enlarged view of part G in Fig. 12;
Fig. 14 is a top view of part G in Fig. 12;
Fig. 15 is an enlarged view of part H in Fig. 13;
Fig. 16 is a structural diagram of a culture tank;
Fig. 17 is an enlarged view of part I in Fig. 16;
Fig. 18 is an enlarged view of part J in Fig. 16;
Fig. 19 is a structural diagram of a lifting component;
Fig. 20 is an enlarged view of part K in Fig. 19; and
Fig. 21 is a structural diagram of a first fish driving frame.

In the above drawings, W1 points to the horizontal plane, W2 points to the preset high water level inside the cabin, and W3 points to the preset low water level inside the cabin.

### DETAILED DESCRIPTION OF THE INVENTION

In Embodiment 1, the deep-sea and far-sea aquaculture dual-hull vessel and method realize immersed culture of various fish outside a hull, and full-cycle culture from small fry to harvesting is conducted using the natural wild water environment in deep-sea and far-sea areas.

At the same time, the transfer between the hull and a culture tank can be adjusted according to a culture plan, making the transfer and loading and unloading operations between the hull and shore-based transport facilities more convenient, thus realizing dynamic and refined aquaculture management.

The following technical scheme put forward in this application can be widely applied to immersed three-dimensional culture of many kinds of fish, including benthic fish.

Water circulation between a vessel cabin and the external environment can be realized by biofiltration technology. For example, the vessel cabin intakes water from outside the hull and inject it to form a directional circulating water flow under the control of an internal circulation device. Eventually, water is discharged through a drainage pipe to the outside of the hull to achieve the circulation and purification of seawater inside and outside the cabin.

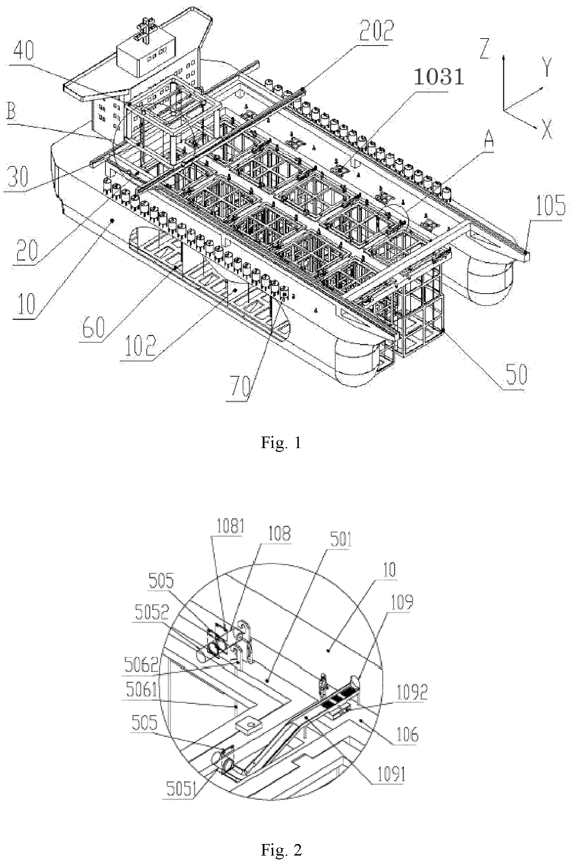

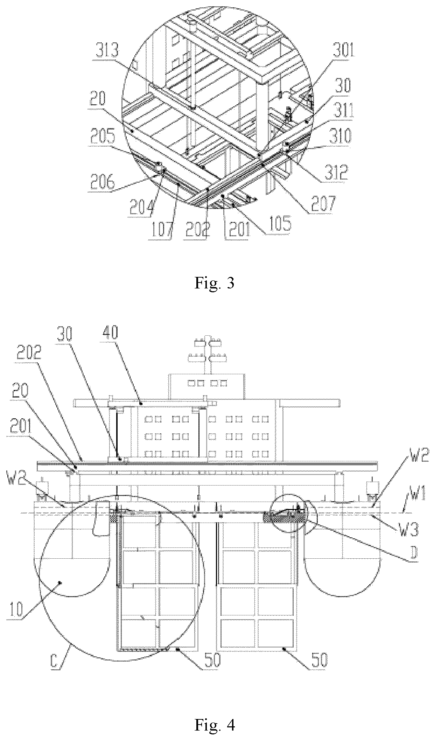

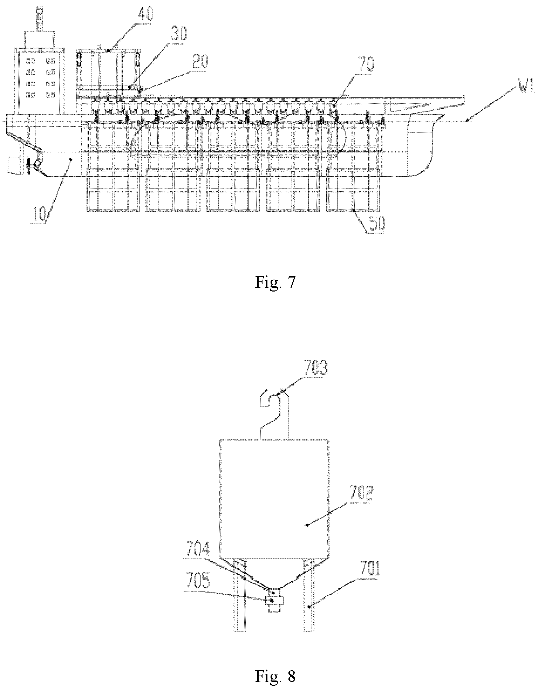

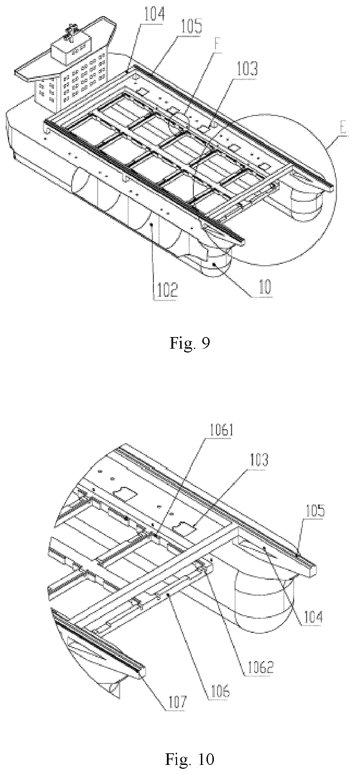

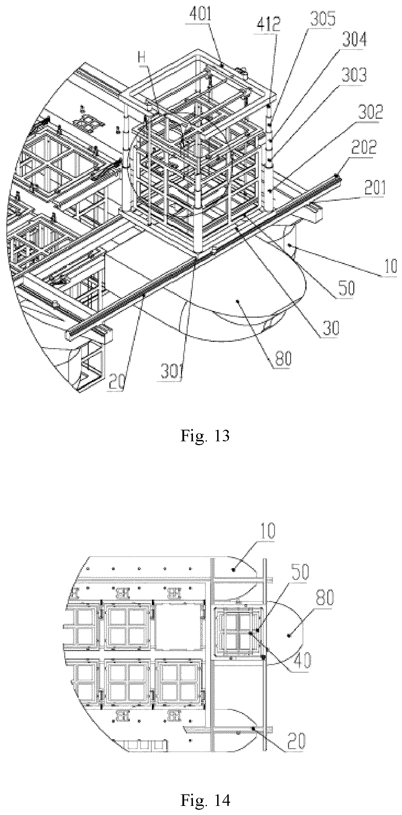

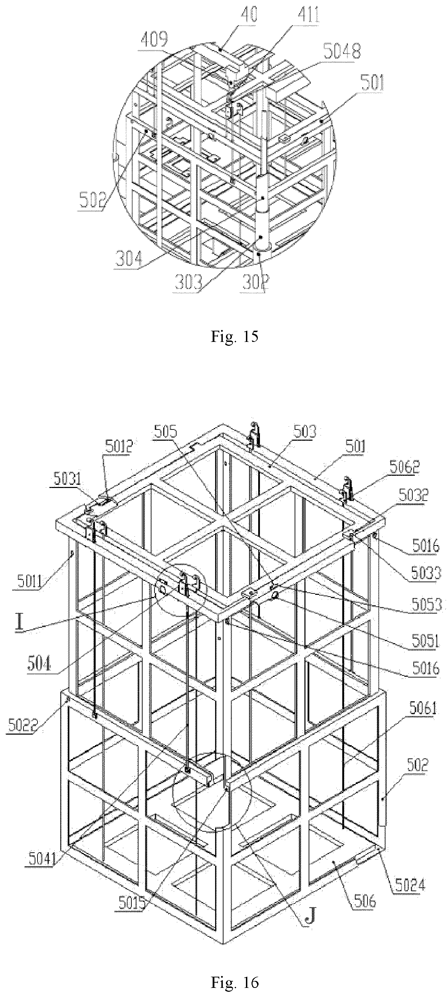

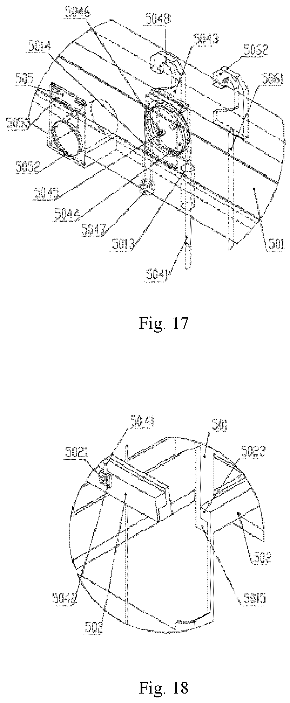

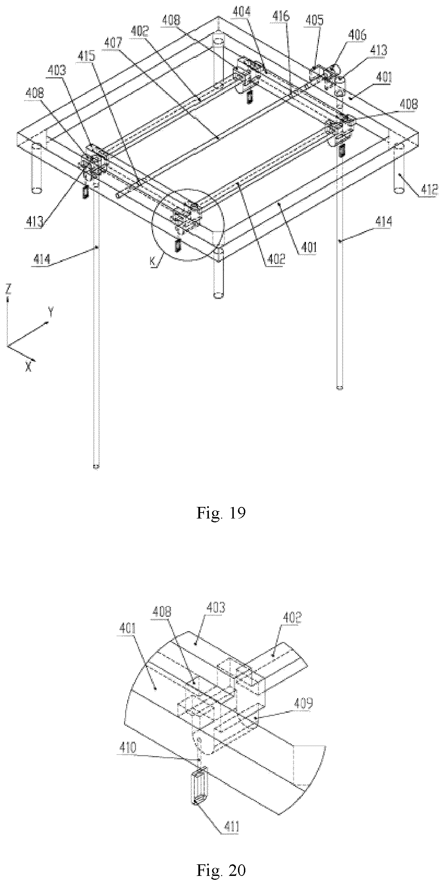

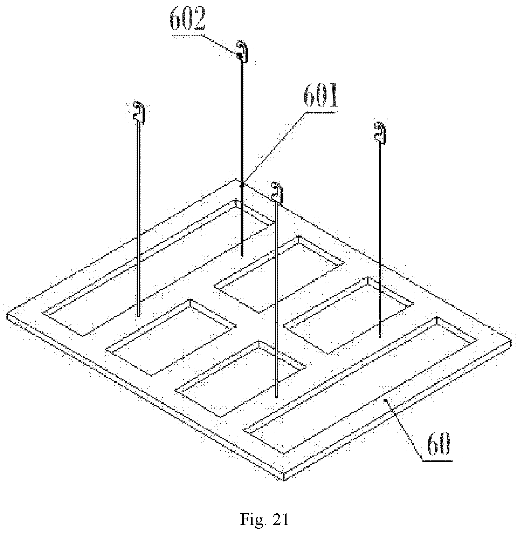

As shown in Figs. 1-21, the deep-sea and far-sea aquaculture dual-hull vessel comprises hull components 10 on two sides respectively, culture tanks 50 between the hull components 10, and a sorter 1091 for connecting the hull components 10 with the culture tank 50 and directionally transferring cultured fish from the hull components 10 to the culture tank 50.

A plurality of enclosed and isolated compartments 102 are provided in the hull component 10 for temporary culture and transportation during the transportation of small fry to a culture area, transportation of adult fish to the shore for sale, and transition in different sea areas as required.

The top of each compartment 102 is provided with a hatch 103 which can be closed by a compartment cover 1031;
a longitudinal guide rail 105 is arranged at the top of the hull component 10 on each side, which is fixedly connected with the hull component through a frame 104, and a first rack 107 is provided along the side of the longitudinal guide rail 105; and
a partition frame 106 is arranged between the tops of the hull components 10 on two sides, the partition frame 106 has a plurality of evenly distributed upward-opening notches 1061, and a plurality of slots 1062 are formed in the partition frame 106.

A side, facing the culture tank 50, of the hull component 10 is provided with two rows of openings arranged vertically, the higher row of openings is located above a waterline of the hull, to form cabin fish outlets 109, the lower row of openings is located below the waterline of the hull, to form cabin fish inlets 108, and both the cabin fish outlet 109 and the cabin fish inlet 108 penetrate through the partition frame 106.

The cabin fish outlet 109 and the cabin fish inlet 108 are closed at ordinary times and opened for use when transferring fish. For example, the partition frame 106 is provided with a first sealing groove 1082, and a first sealing door 1081 is inserted into the first sealing groove 1082 at ordinary times to close the cabin fish inlet 108 which is located above W3 but below W1. Accordingly, the cabin fish outlet 109 is arranged at W2 which is higher than W1.

Fish collecting devices are arranged at the bottom of the compartment 102 of the hull component 10 and the bottom of the culture tank 50, so as to drive the cultured fish to their respective fish outlets. The fish collecting device comprises a first fish driving frame 60 and a second fish driving frame 506.

A plurality of feed bins 70 are arranged on a top deck of the hull component 10, and feeds required for aquaculture are stored in the feed bins 70. The feed bin 70 is composed of a bracket 701, a bin body 702, a hook 703, a discharge port 704 and a valve 705. The discharge port 704 is arranged at the bottom of the bin body 702 and controlled by the valve 705 to be opened and closed.

A mobile lifting mechanism, such as a gantry crane, is arranged between the tops of the hull components 10 on two sides. The mobile lifting mechanism comprises a lifting component 40, and a longitudinal moving component 20 and a transverse moving component 30 distributed along the hulls on two sides. The longitudinal moving component 20 has an H-shaped frame bottom structure, and two transverse guide rails 202 are fixedly connected to the H-shaped frame bottom structure.

The mobile lifting mechanism is used to lift the feed bins 70 placed on the hulls on two sides. During the traveling along the H-shaped frame, the valve of the feed bin is opened to dispense feeds to the culture tank 50 below along a traveling track of the gantry crane.

The longitudinal moving component 20 is provided with a first motor 205 fixedly connected to the longitudinal moving component 20 through a first motor mounting plate 204, a first guide groove 201 at the bottom, and a second rack 207 fixedly connected to the side. A first gear 206 is in driving connection with an output shaft of the first motor 205, the first gear 206 meshes with the first rack 107, and the first guide groove 201 is slidably connected with the longitudinal guide rail 105. Driven by the first motor 205, the longitudinal moving component 20 can move back and forth in an X-axis direction.

The transverse moving component 30 is provided with a second motor 311, a plurality of groups of vertically arranged first guide sleeves 302, and a second guide groove 301 at the bottom. The first guide sleeve 302 is vertically connected to the lifting component 40 above, the second guide groove 301 is slidably connected to the transverse guide rail 202 of the longitudinal moving component 20, the second motor 311 is fixedly connected to a lower part of the transverse moving component 30 through a second motor mounting plate 310, the second gear 312 is in driving connection with an output shaft of the second motor 311, and the second gear 312 meshes with the second rack 207. Driven by the second motor 311, the traverse moving component 30 can move back and forth in a Y-axis direction.

The lifting component 40 comprises a lifting frame 401, a plurality of groups of guide columns 412 are arranged at the bottom of the lifting frame 401, and two groups of guide rods 402 are fixedly connected inside the lifting frame 401. Two ends of a left slide bar 403 and a right slide bar 404 are each fixedly connected with a sliding sleeve 408, and the sliding sleeves 408 are slidably connected with the guide rods 402. The left slide bar 403 is provided with a left-handed thread 415, and the right slide bar 404 is provided with a right-handed thread 416.

A third motor 406 is connected to the side of the lifting frame 401 through a U-shaped plate 405, and a bidirectional screw 407 is fixedly connected with an output shaft of the third motor 406. The bidirectional screw 407 penetrates through the left slide bar 403 and the right slide bar 404 in a threaded connection manner, that is, two ends of the bidirectional screw 407 are symmetrically provided with a right-handed thread and a left-handed thread respectively. Driven by the third motor 406, the left slide bar 403 and the right slide bar 404 slide toward or away from each other in the lifting frame 401 along the Y-axis direction, so as to change the distance therebetween.

An electric hoist 409 is connected to each sliding sleeve 408, and the electric hoist 409 is connected with a pulling plate 411 below through a first steel cable 410.

A plurality of fourth motors 413 are connected to the lifting frame 401, output shafts of the fourth motors 413 are fixedly connected with a lifting screw 414, and the lifting screw 414 is threadedly connected with a lifting nut 313 of the transverse moving component 30.

A first telescopic rod 303, a second telescopic rod 304 and a third telescopic rod 305 are sequentially nested and slidably connected along an axial center line of the first guide sleeve 302, and the top of the third telescopic rod 305 is connected with the guide column 412. Driven by the fourth motors 413, the first telescopic rod 303, the second telescopic rod 304 and the third telescopic rod 305 sequentially expand and contract synchronously, so that the vertical height of the lifting component 40 can be adjusted.

The culture tank 50 is located between the hull components 10 on two sides in a suspended connection manner for daily culture. That is, when the dual-hull vessel travels to a deep-sea and far-sea aquaculture area, the small fry or the temporarily cultured adult fish inside the hull are transferred to the culture tank 50 for immersed culture in the natural wild environment outside the hull. Fish ready for sale are transferred from the culture tank 50 to the interior of the compartment 102 of the hull component 10, and returned to the shore by the dual-hull vessel for unloading and sale.

The sides of the culture tank 50 facing the hulls on two sides are provided with culture tank fish inlets and culture tank fish outlets, thus forming connecting channels with hull fish inlets and outlets. The culture tank fish inlets and outlets are flush with the waterline of the hull, and are closed at ordinary times and opened for use when transferring fish.

The deep-sea and far-sea aquaculture mentioned in this application belongs to immersed aquaculture. In order to increase the volume of aquaculture water, the culture tank needs to have a large planar capacity, such as 400 square meters. In order to reduce water resistance during the traveling of the dual-hull vessel, it is necessary to separate the culture tank 50 from the water and put it on the top of the hull. In order to prevent significant swaying when the culture tank rises above the water surface, a vertically extendable structure is provided to achieve volume reduction during non-culture periods, facilitating storage and fixation.

The culture tank 50 is composed of an upper space 501 and a lower space 502 which are linked, the top of the upper space 501 is connected with a culture tank cover 503 and a plurality of movable pulley components 504, and the bottom of the lower space 502 is provided with a second fish driving frame 506.

The upper space 501 is provided with culture tank fish inlets 5051 and culture tank fish outlets 5052, second sealing grooves 5053 are arranged at the culture tank fish inlets 5051 and the culture tank fish outlets 5052, and second sealing doors 505 close the culture tank fish inlets 5051 and the culture tank fish outlets 5052 through the second sealing grooves 5053.

The transfer of cultured fish between the compartment 102 and the culture tank 50 is realized mainly by means of the water level difference between them.

Specifically, when the cultured fish are transferred from the hull to the culture tank, the cabin fish outlets 109 communicate with the culture tank fish inlets 5051, seawater outside the vessel is injected into the hull by using equipment such as a water pump, so that the water level in the cabin is higher than the external seawater, and the first fish driving frame 60 at the bottom of the compartment 102 rises to concentrate the cultured fish at the upper part of the hull and transfer the cultured fish to the culture tank 50.

When the cultured fish are transferred from the culture tank to the hull, the cabin fish inlets 108 communicate with the culture tank fish outlets 5052, the seawater in the hull is pumped out by the water pump to make the water level in the cabin lower than the external seawater, and the second fish driving frame 506 at the bottom of the culture tank 50 rises to concentrate the cultured fish at the upper part of the culture tank 50 and transfer the cultured fish to the compartment 102.

One end of the culture tank cover 503 is hinged to a pin hole 5012 of the upper space 501 through a pin 5031, and the other end of the culture tank cover 503 is fixedly connected with a corresponding screw hole of the upper space 501 through a locking hole 5033 in a limit block 5032 fixedly connected with the culture tank cover 503, so that the culture tank cover 503 can be opened for maintenance or inspection.

The movable pulley component 504 is composed of a second steel cable 5041, a fixing plate 5042, a cable bracket 5043, a pulley 5044, a pulley shaft 5045, a cable bracket hole 5046 and a cable head 5047, and a cable hook 5048 is arranged on the cable bracket 5043. The second steel cable 5041 is wound around the pulley 5044, with one end fixedly connected to the fixing plate 5042 and the other end fixedly connected to the cable head 5047. The pulley shaft 5045 fixedly connected to the pulley 5044 is sleeved in the cable bracket hole 5046 of the cable bracket 5043, and the pulley 5044 is rotatably connected with the pulley shaft 5045. The cable head 5047 penetrates through a first hole 5014 of the upper space 501 and is fixedly connected with the upper space 501. Further, the second steel cable 5041 penetrates through a second hole 5013 while maintaining a gap from the second hole. The second steel cable 5041 is fixedly connected with a shaft pin 5021 fixedly connected to the lower space 502 through the fixing plate 5042.

An outer side wall of the upper space 501 and an inner side wall of the lower space 502 are in clearance fit, and the vertical height of the upper space 501 is greater than that of the lower space 502. The bottom of the upper space 501 is open, and the bottom of the lower space 502 is a closed frame. At the maximum extended position, an upper end face of an outer boss 5015 fixedly connected to the upper space 501 contacts and is fixedly connected to a lower end face of an inner boss 5023 of the lower space 502, thus restricting the lower space 502 from continuing to extend. When vertically shortened to the minimum height, a bottom surface of the upper space 501 is in contact with an inner bottom surface 5024 of the lower space 502, so the shortening cannot be continued. At this point, a first hole 5022 of the lower space 502 and a third hole 5011 of the upper space 501 are concentric, and can be locked together by inserting a bolt between them.

Further, when a fourth hole 5016 of the upper space 501 is fixedly connected with the slot 1062 of the hull component 10 by a bolt, the upper space 501 is relatively fixedly suspended. By pulling the cable hook 5048 upward, the lower space 502 moves upward. Based on the driving principle of a movable pulley, the moving distance of the cable hook 5048 is half that of the lower space 502, thus reducing the distance traveled by the first steel cable 410, driven by the electric hoist 409 of the lifting component 40, ultimately reducing the overall height of the lifting component 40.

The second fish driving frame 506 is arranged on an inner bottom surface 5024 of the lower space 502, a plurality of second hooks 5062 are connected to the second fish driving frame 506 through second rods 5061, and the second hooks 5062 extend out and are located above the top of the upper space 501.

Correspondingly, the first fish driving frame 60 arranged at the bottom of each compartment 102 is vertically connected with first hooks 602 above through first rods 601, and the first hooks 602 extend out and are located on the top deck of the hull component 10.

To improve the environmental quality for fish culture in the culture tank 50, and to mimic the natural water environment as closely as possible, the culture tank is a hollow frame open structure. An inner side of the upper space 501, an outer side of the lower space 502, an outer side of the culture tank cover 503, and an upper surface of the second fish driving frame 506 are all covered with fishing nets.

The sorter 1091 has one end connected to the cabin fish outlet 109 and the other end connected to the culture tank fish inlet 5051. The sorter 1091 is provided with a plurality of sorting ports 1092, and the sorted cultured fish can be transferred to different culture tanks 50, or the fish ready for sale can be directly unloaded from the vessel.

Based on the structural design of the above-mentioned deep-sea and far-sea aquaculture dual-hull vessel, the application also realizes a method for immersed deep-sea and far-sea aquaculture of many kinds of fish outside the hull, as described below.

The natural water environment outside the vessel is used to conduct open type fish culture from small fry to adult fish in culture tanks 50;
during the traveling of the dual-hull vessel (including but not limited to transportation between an aquaculture sea area and a shore base, and temporary return to port to avoid adverse weather and sea conditions), the cultured fish are temporarily kept within a cabin component 10;
based on transfer channels and water level difference control between hull components 10 on two sides and the culture tanks 50, fish are directionally transferred or unloaded;
feed bins 70 are lifted by a mobile lifting mechanism at the top of the hull component 10, and feeds are dispensed to the culture tank 50 below during movement along an H-shaped frame;
the mobile lifting mechanism is used to lift the culture tanks 50, and the culture tanks 50 are lifted out of the water after contracting vertically; and during the traveling of the dual-hull vessel, the culture tank 50 is placed on a top deck of the hull component 10.

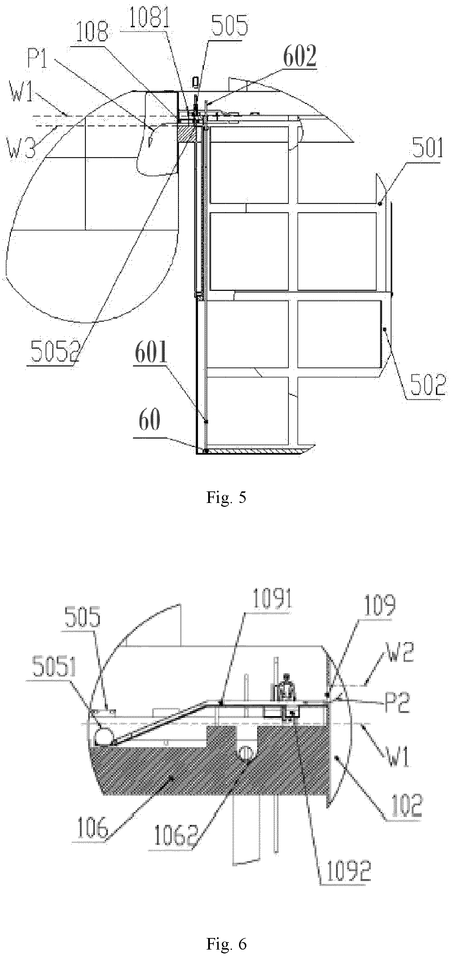

Further, in the process of transferring the cultured fish from the culture tank 50 to the hull component 10, the water level in the compartment 102 is first lowered to W3 and the water is continuously pumped out by using a water pump, then the second sealing door 505 and the first sealing door 1081 are opened, and the pulling plate 411 connected with the end of the first steel cable 410 is driven by the electric hoist 409 to hook the second hook 5062 of the second fish driving frame 506 and pull up the second fish driving frame 506, so that the cultured fish enter the compartment 102 in the direction of arrow P1 in Fig. 5, via the culture tank fish outlets 5052 and the cabin fish inlets 108.

In the process of transferring the cultured fish from the hull component 10 to the culture tank 50, the water level in the compartment 102 is first raised to W2 and the water is continuously pumped inward by using a water pump, then the second sealing door 505 is opened, and the pulling plate 411 connected with the end of the first steel cable 410 is driven by the electric hoist 409 to hook the first hook 602 of the first fish driving frame 60 and pull up the first fish driving frame 60, so that the cultured fish enter the culture tank 50 in the direction of arrow P2 in Fig. 6, via the culture tank fish inlets 5051, the cabin fish outlets 109 and the sorter 1091.

In the feeding process as described above, the mobile lifting mechanism located on the top deck of the hull components 10 on two sides lifts the feed bins 70 while traveling along the H-shaped frame formed by the longitudinal moving component 20 and the transverse moving component 30, and controls a valve 705 to open to dispense the feeds stored in the feed bins 70 into the culture tanks 50 below.

In the process of lifting the culture tank 50, based on the clearance fit between the outer side wall of the upper space 501 and the inner side wall of the lower space 502, the upper space 501 and the lower space 502 are retracted towards each other to reduce the volume of the tank until a bottom surface of the upper space 501 contacts an inner bottom surface 5024 of the lower space 502; and at this point, the first hole 5022 of the lower space 502 is concentric with the third hole 5011 of the upper space 501, and the whole culture tank 50 can be locked by inserting a bolt between them.

During the directional transfer or unloading of the cultured fish, a sorter 1091 is used to connect cabin fish outlets 109 with culture tank fish inlets 5051, and the sorted cultured fish are transferred to different culture tanks 50 through a plurality of sorting ports 1092, or fish ready for sale are directly unloaded from the vessel.

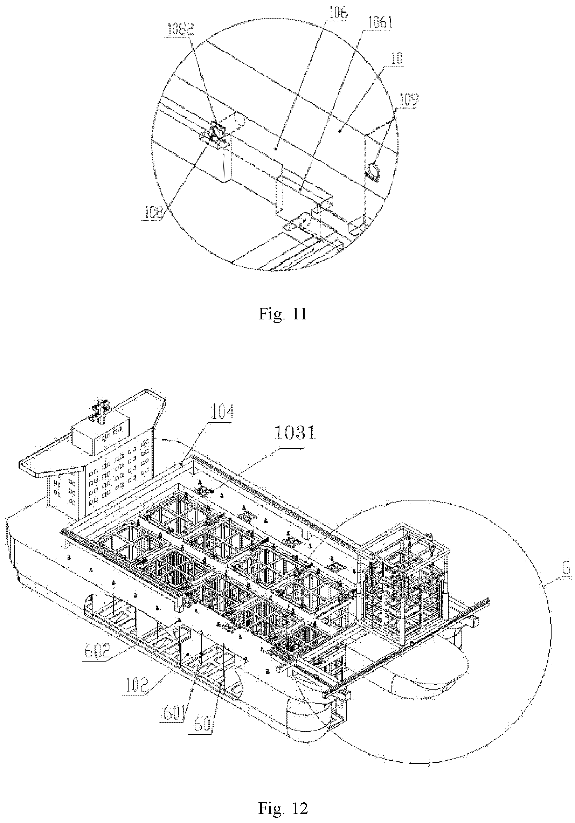

As shown in Figs. 12-15, the application provides a specific operation process of dismounting the culture tank 50 from the hull component 10:
after vertically compressing the culture tank 50 and putting it away, the culture tank 50 is dismounted from the vessel by using a maintenance boat 80 and moved to other places, such as being transported back to the shore base for maintenance or being transferred to other vessels nearby for reuse.

Specifically, driven by the electric hoist 409 of the lifting component 40, the first steel cable 410 pulls the pulling plate 411 at its end to hook the cable hook 5048 of the movable pulley component 504, so that the upper space 501 and the lower space 502 can be retracted vertically towards each other to the minimum volume; then, a plurality of fourth motors 413 simultaneously drive the lifting screw 414 and the lifting nut 313 of the transverse moving component 30 to rotate relatively to lift the entire lifting component 40 to be completely out of the water; finally, the first motor 205 and the second motor 311 are started at the same time, so that the culture tank 50 is laterally moved above the maintenance boat 80, the plurality of fourth motors 413 are driven at the same time to pull down the entire lifting component 40 until the culture tank 50 lands on the deck of the maintenance boat 80, and the pulling plate 411 is separated from the cable hook 5048; and according to the destination of maintenance or reuse, the culture tank 50 is transferred to other places by the maintenance boat 80.

The process of using the above dual-hull vessel for deep-sea and far-sea aquaculture comprises the following stages:
(1) transportation stage from shore base to deep-sea and far-sea aquaculture area
   small fry or adult fish are contained in the compartment 102; in order to facilitate the transportation of the culture tank 50 and reduce the adverse effects of the culture tank on the traveling of the vessel, such as wind resistance and water resistance, the upper space 501 and the lower space 502 of the culture tank 50 are retracted vertically towards each other to the minimum volume; and by inserting a bolt into the first hole 5022 of the lower space 502 and the third hole 5011 of the upper space 501 of the culture tank 50 to secure the upper space and the lower space, the culture tank 50 can be fixedly connected with the partition frame 106 through the slot 1062 at the bottom, so as to place the culture tank 50 on the top deck of the hull component 10;
   at the same time, the lifting component 40 is lowered to the lowest vertical position, and all the compartment covers 1031 are closed;
(2) deep-sea and far-sea aquaculture stage
   after arriving at the destination, the bolt connection between the first hole 5022 of the lower space 502 and the third hole 5011 of the upper space 501 is released, and the fixed connection between the slot 1062 at the bottom of the culture tank 50 and the partition frame 106 is released;
   by adjusting the longitudinal moving component 20 and the transverse moving component 30, and using the electric hoist 409 of the lifting component 40 to drive the pulling plate 411 at the end of the first steel cable 410 to hook the cable hook 5048 of the culture tank 50 to descend continuously, the outer bosses at the upper part of each upper space 501 are sequentially dropped into the notch 1061 of the partition frame 106 of the hull component 10, then the fourth hole 5016 of the upper space 501 is fixedly connected with the slot 1062 of the hull component 10 by a screw, and the lower space 502 is pulled to the lowest vertical position by its own weight;
   the water level of the compartment 102 is raised to W2 by a water pump, by adjusting the longitudinal moving component 20, the transverse moving component 30 and the lifting component 40, the first steel cable 410 is pulled and driven by the electric hoist 409 to hook the first hook 602 of the first fish driving frame 60, so that the first fish driving frame 60 is continuously lifted vertically to drive the cultured fish to the cabin fish outlets 109, and then the second sealing door 505 is opened, allowing the cultured fish to be directionally transferred to the culture tank 50 through the sorter 1091 and the culture tank fish inlets 5051;
   at the same time, defective cultured fish can also be picked out by the sorter 1091 and moved to other places through the sorting ports 1092; and after the cultured fish transfer operation is completed, the second sealing door 505 is closed, and no cultured fish will be temporarily kept in the compartment 102;
   in the daily culture process of the culture tank 50, the pulling plate 411 at the end of the first steel cable 410 of the electric hoist 409 is driven to hook the hook 703 of the feed bin 70 by adjusting the longitudinal moving component 20, the transverse moving component 30 and the lifting component 40, and the feed bin 70 is moved in the X, Y and Z-axis directions in Fig. 1 until it is vertically above the culture tank 50, and the valve 705 is opened by a control program for directional feeding;
(3) transportation stage from deep-sea and far-sea aquaculture area back to shore base
   Step 1, the water level of the compartment 102 is lowered below W3 by a water pump, the culture tank fish inlets 5051 are closed, the culture tank fish outlets 5052 are opened, and the first sealing door 1081 of the cabin fish inlets 108 is opened at the same time;
      by adjusting the longitudinal moving component 20, the transverse moving component 30 and the lifting component 40, the pulling plate 411 at the end of the first steel cable 410 is driven by the electric hoist 409 to hook the second hook 5062 of the second fish driving frame 506, so that the second fish driving frame 506 is vertically lifted to drive the cultured fish from the culture tank 50 to the compartment 102 via the culture tank fish outlets 5052 and the cabin fish inlets 108; at this point, the water pump continuously pumps water to form a directional water flow from the culture tank 50 to the compartment 102, which is beneficial to the rapid movement of the cultured fish; and transfer of the cultured fish in each culture tank 50 to the designated compartment 102 is completed in turn;
   Step 2, the longitudinal moving component 20 and the transverse moving component 30 are adjusted, a plurality of fourth motors 413 are started above a certain culture tank 50 to drive the lifting screw 414 and the lifting nut 313 to rotate spirally, and then under the joint action of the first telescopic rod 303, the second telescopic rod 304 and the third telescopic rod 305, the entire lifting component 40 is lifted to the highest vertical position; the pulling plate 411 of the first steel cable 410 pulled by the electric hoist 409 of the lifting component 40 is connected with the cable hook 5048 of the culture tank 50, and under the traction of the electric hoist 409, the lower space 502 and the upper space 501 are pulled to be retracted vertically towards each other and compressed to the minimum height;
   Step 3, the culture tank cover 503 is closed, and the fixed connection between the fourth hole 5016 of the upper space 501 and the slot 1062 of the hull component 10 is released; under the traction of the electric hoist 409, the pulling plate 411 continues to pull the cable hook 5048 outward, so that the horizontal limit of the upper space 501 is released; the upper space 501 and the lower space 502 continue to move up vertically, and the culture tank 50 is completely suspended from the water; when the bottom surface of the lower space 502 is higher than the slot 1062 of the partition frame 106, a bolt or other obstacles are inserted, and then the pulling plate 411 pulled by the electric hoist 409 drives the cable hook 5048 to move down, that is, the upper space 501 and the lower space 502 move down vertically as a whole until the lower space 502 falls on the bolt or other obstacles, at which time the culture tank 50 is fixedly connected with the partition frame 106 through steel cables or bolts; finally, the pulling plate 411 is disengaged from the cable hook 5048 to release the culture tank 50, and the culture tank 50 is placed on the top deck of the hull component 10; and according to the above steps, the placement of all the culture tanks 50 is completed in turn;
   Step 4, a bolt penetrates into the first hole 5022 of the lower space 502 and the third hole 5011 of the upper space 501 to secure the lower space and the upper space; at the same time, a plurality of fourth motors 413 are started to drive the lifting screw 414 and the lifting nut 313 to rotate spirally; and under the joint action of the first telescopic rod 303, the second telescopic rod 304 and the third telescopic rod 305, the lifting component 40 is lowered to the lowest vertical position, and all the compartment covers 1031 are closed, so that the dual-hull vessel can travel back to the shore base safely with minimum resistance.

In summary, the embodiments given with reference to the attached drawings are only preferred schemes for achieving the purpose of the present invention. According to this, those skilled in the art can get inspiration and directly deduce other alternative structures that conform to the design concept of the invention. Other structural features thus obtained should also fall within the scope of the schemes described in the present invention defined by the appended claims.

## Claims

1. A deep-sea and far-sea aquaculture dual-hull vessel, comprising hull components (10) on two sides, culture tanks (50) located between the hull components (10) in a suspended connection manner, and a sorter (1091) connecting the hull components (10) with the culture tanks (50) and directionally transferring cultured fish from the hull components (10) to the culture tanks (50); wherein
a mobile lifting mechanism is arranged between the tops of the hull components (10) on two sides, the mobile lifting mechanism comprises a lifting component (40), and a longitudinal moving component (20) and a transverse moving component (30) distributed along the hulls on two sides, and the longitudinal moving component (20) has an H-shaped frame bottom structure;
a biofiltration device for circulating water with the external sea area is arranged in the hull component (10);
wherein the deep-sea and far-sea aquaculture dual-hull vessel further comprises a plurality of movable pulley components (504);
the culture tank (50) is composed of an upper space (501) and a lower space (502) which are linked, and the top of the upper space is connected with the plurality of movable pulley components (504);
the upper space (501) is provided with culture tank fish inlets (5051) and culture tank fish outlets (5052) facing the sides of the hulls on two sides;
an outer side wall of the upper space (501) and an inner side wall of the lower space (502) are in clearance fit; at a maximum extended position of the culture tank (50), an upper end face of an outer boss fixedly connected to the upper space (501) contacts and is fixedly connected to a lower end face of an inner boss of the lower space (502); when vertically shortened to a minimum height of the culture tank (50), a bottom surface of the upper space (501) is in contact with an inner bottom surface of the lower space (502), and at this point, a first hole (5022) of the lower space (502) and a third hole (5011) of the upper space (501) are concentric;
a plurality of enclosed and isolated compartments (102) are arranged in the hull component (10), a partition frame (106) is arranged between the tops of the hull components (10) on two sides, and the partition frame (106) has a plurality of upward-opening notches (1061);
a side, facing the culture tank (50), of the hull component (10) is provided with cabin fish outlets (109) and cabin fish inlets (108) arranged horizontally, and both the cabin fish outlet (109) and the cabin fish inlet (108) penetrate through the partition frame (106);
fish collecting devices are arranged at the bottom of each compartment (102) of the hull component (10) and the bottom of each culture tank (50), wherein the fish collecting device comprises a first fish driving frame (60) and a second fish driving frame (506), the bottom of the compartment (102) is provided with the first fish driving frame (60) and the bottom of the lower space (502) is provided with the second fish driving frame (506);
the transfer of cultured fish is realized by the water level difference between the compartment (102) and the culture tank (50);
wherein the deep-sea and far-sea aquaculture dual-hull vessel further comprises a water pump;
when the cultured fish are transferred from the hull to the culture tank (50), the cabin fish outlets (109) communicate with the culture tank fish inlets (5051), seawater outside the vessel is injected into the hull by using the water pump, so that the water level in the cabin is higher than the external seawater, and the first fish driving frame (60) at the bottom of the compartment (102) rises to concentrate the cultured fish at the upper part of the hull and transfer the cultured fish to the culture tank (50); and
when the cultured fish are transferred from the culture tank (50) to the hull, the cabin fish inlets (108) communicate with the culture tank fish outlets (5052), the seawater in the hull is pumped out by the water pump to make the water level in the cabin lower than the external seawater, and the second fish driving frame (506) at the bottom of the culture tank (50) rises to concentrate the cultured fish at the upper part of the culture tank (50) and transfer the cultured fish to the compartment (102).

2. The deep-sea and far-sea aquaculture dual-hull vessel according to claim 1, wherein a plurality of feed bins (70) are arranged on a top deck of the hull component (10), the feed bin (70) is composed of a bracket (701), a bin body (702), a hook (703), a discharge port (704) and a valve (705), and the discharge port (704) is arranged at the bottom of the bin body (702) and controlled by the valve (705) to be opened and closed.

3. The deep-sea and far-sea aquaculture dual-hull vessel according to claim 1, wherein a longitudinal guide rail is arranged at the top of the hull component (10) on each side, and a first rack (107) is arranged along the longitudinal guide rail; the longitudinal moving component (20) comprises a first motor, a first guide groove at the bottom, and a transverse guide rail fixedly connected to the side; a second rack (207) is fixedly connected to the side of the transverse guide rail; a first gear is in driving connection with an output shaft of the first motor, the first gear meshes with the first rack (107), and the first guide groove is slidably connected with the longitudinal guide rail;
the transverse moving component (30) comprises a second motor, a plurality of groups of vertically arranged first guide sleeves, and a second guide groove at the bottom; the first guide sleeve is vertically connected to the lifting component (40) above, the second guide groove is slidably connected to the transverse guide rail of the longitudinal moving component (20), a second gear is in driving connection with an output shaft of the second motor, and the second gear meshes with the second rack (207);
the lifting component (40) comprises a lifting frame (401) and a third motor, a plurality of groups of guide columns (412) are arranged at the bottom of the lifting frame (401), and two groups of guide rods are fixedly connected inside the lifting frame (401); two ends of a left slide bar and a right slide bar are each fixedly connected with a sliding sleeve, and the sliding sleeves are slidably connected with the guide rods; a bidirectional screw is fixedly connected with an output shaft of the third motor, the bidirectional screw penetrates through the left slide bar and the right slide bar in a threaded connection manner, and two ends of the bidirectional screw are symmetrically provided with a right-handed thread and a left-handed thread respectively; an electric hoist is connected to each sliding sleeve, and the electric hoist is connected with a pulling plate below through a first steel cable; a plurality of fourth motors are connected to the lifting frame (401), output shafts of the fourth motors are fixedly connected with a lifting screw, and the lifting screw is threadedly connected with a lifting nut of the transverse moving component (30); and a plurality of groups of telescopic rods are sequentially nested and connected along an axial center line of the first guide sleeve, and the top of each telescopic rod is fixedly connected with the corresponding guide column.

4. The deep-sea and far-sea aquaculture dual-hull vessel according to claim 1, wherein the movable pulley component (504) is provided with a cable hook (5048) on a cable bracket (5043), and a second steel cable (5041) is wound around a pulley (5044), with one end fixedly connected to a fixing plate (5042) and the other end fixedly connected to a cable head (5047); a pulley shaft (5045) fixedly connected to the pulley (5044) is sleeved in a cable bracket hole (5046) of the cable bracket (5043), and the pulley (5044) is rotatably connected with the pulley shaft (5045); and the cable head (5047) is fixedly connected with the upper space (501), and the second steel cable (5041) is fixedly connected with the lower space (502).

5. The deep-sea and far-sea aquaculture dual-hull vessel according to claim 4, wherein the second fish driving frame (506) is arranged on an inner bottom surface of the lower space (502), a plurality of second hooks (5062) are connected to the second fish driving frame (506) through second rods, and the second hooks (5062) extend out and are located above the top of the upper space (501);
the first fish driving frame (60) arranged at the bottom of each compartment (102) is vertically connected with first hooks (602) above through first rods (601), and the first hooks (602) extend out and are located on the top deck of the hull component (10); and
an inner side of the upper space (501), an outer side of the lower space (502), and upper surfaces of the first fish driving frame (60) and the second fish driving frame (506) are all covered with fishing nets.

6. The deep-sea and far-sea aquaculture dual-hull vessel according to claim 1, wherein one end of the sorter (1091) is connected with the cabin fish outlets (109), and the other end is connected with the culture tank fish inlets (5051); and the sorter (1091) has a plurality of sorting ports (1092).

## Patentansprüche

1. Ein Hochsee- und Fernsee-Aquakultur-Doppelrumpfschiff, das Rumpfkomponenten (10) auf zwei Seiten, zwischen den Rumpfkomponenten (10) in einer hängenden Verbindungsart angeordnete Zuchttank (50) und einen Sortierer (1091) umfasst, der die Rumpfkomponenten (10) mit den Zuchttank (50) verbindet und Zuchtfische gerichtet von den Rumpfkomponenten (10) in die Zuchttank (50) überführt; wobei
ein mobiler Hebemechanismus zwischen den Oberseiten der Rumpfkomponenten (10) auf zwei Seiten angeordnet ist, der mobile Hebemechanismus eine Hebekomponente (40) und eine längs bewegliche Komponente (20) und eine quer bewegliche Komponente (30) umfasst, die entlang der Rümpfe auf zwei Seiten verteilt sind, und die längs bewegliche Komponente (20) eine H-förmige Rahmenbodenstruktur aufweist;
in der Rumpfkomponente (10) eine Biofiltrationseinrichtung zur Wasserzirkulation mit dem äußeren Meeresbereich angeordnet ist;
wobei das Hochsee- und Fernsee-Aquakultur-Doppelrumpfschiff ferner eine Vielzahl beweglicher Riemenscheibenkomponenten (504) umfasst;
der Zuchttank (50) aus einem oberen Raum (501) und einem unteren Raum (502) besteht, die miteinander verbunden sind, und die Oberseite des oberen Raums mit der Vielzahl von beweglichen Riemenscheibenkomponenten (504) verbunden ist;
der obere Raum (501) mit Fischzuchttank-Einlässen (5051) und Fischzuchttank-Auslässen (5052) versehen ist, die auf zwei Seiten den Seiten der Rümpfe zugewandt sind;
eine äußere Seitenwand des oberen Raums (501) und eine innere Seitenwand des unteren Raums (502) in Spielpassung sind; in einer maximal ausgefahrenen Position des Zuchttanks (50) eine obere Endfläche eines äußeren Vorsprungs, der fest mit dem oberen Raum (501) verbunden ist, eine untere Endfläche eines inneren Vorsprungs des unteren Raums (502) berührt und fest mit dieser verbunden ist; wenn der Zuchttank (50) vertikal auf eine minimale Höhe verkürzt ist, berührt eine Bodenfläche des oberen Raums (501) eine innere Bodenfläche des unteren Raums (502), und an diesem Punkt sind ein erstes Loch (5022) des unteren Raums (502) und ein drittes Loch (5011) des oberen Raums (501) konzentrisch;
eine Vielzahl von geschlossenen und isolierten Abteilen (102) in der Rumpfkomponente (10) angeordnet sind, ein Trennrahmen (106) zwischen den Oberseiten der Rumpfkomponenten (10) auf zwei Seiten angeordnet ist und der Trennrahmen (106) eine Vielzahl von nach oben offenen Kerben (1061) aufweist;
eine dem Zuchttank (50) zugewandte Seite der Rumpfkomponente (10) mit horizontal angeordneten Kabinenfischauslässen (109) und Kabinenfischeinlässen (108) versehen ist, wobei sowohl der Kabinenfischauslass (109) als auch der Kabinenfischeinlass (108) den Trennrahmen (106) durchdringen;
Fischsammelvorrichtungen am Boden jedes Abteils (102) der Rumpfkomponente (10) und am Boden jedes Zuchttanks (50) angeordnet sind, wobei die Fischsammelvorrichtung einen ersten Fischantriebsrahmen (60) und einen zweiten Fischantriebsrahmen (506) umfasst und der Boden des Abteils (102) mit dem ersten Fischantriebsrahmen (60) versehen ist und der Boden des unteren Raums (502) mit dem zweiten Fischantriebsrahmen (506) versehen ist;
der Transfer der Zuchtfische durch den Wasserstandunterschied zwischen dem Abteil (102) und dem Zuchttank (50) realisiert wird;
wobei das Hochsee- und Fernsee-Aquakultur-Doppelrumpfschiff ferner eine Wasserpumpe umfasst;
wenn die Zuchtfische vom Rumpf in den Zuchttank (50) transferiert werden, die Kabinenfischauslässe (109) mit den Fischzuchttank-Einlässen (5051) des Zuchttanks in Verbindung stehen und Seewasser von außerhalb des Schiffes mithilfe der Wasserpumpe in den Rumpf gepumpt wird, sodass der Wasserstand in der Kabine höher ist als das äußere Seewasser, und der erste Fischantriebsrahmen (60) am Boden des Abteils (102) sich hebt , um die Zuchtfische im oberen Teil des Rumpfes zu konzentrieren und in den Zuchttank (50) zu transferieren; und
wenn die Zuchtfische vom Zuchttank (50) in den Rumpf transferiert werden, die Kabinenfischeinlässe (108) der Kabine mit den Fischauslässen (5052) des Zuchttanks in Verbindung stehen, das Seewasser im Rumpf von der Wasserpumpe abgepumpt wird, um den Wasserstand in der Kabine unter den Seewasserstand außerhalb des Tanks zu senken, und der zweite Fischantriebsrahmen (506) am Boden des Zuchttanks (50) sich hebt, um die Zuchtfische im oberen Teil des Zuchttanks (50) zu konzentrieren und die Zuchtfische in das Abteil (102) zu transferieren.

2. Das Hochsee- und Fernsee-Aquakultur-Doppelrumpfschiff nach Anspruch 1, wobei eine Vielzahl von Futterbehältern (70) auf einem Oberdeck der Rumpfkomponente (10) angeordnet ist, der Futterbehälter (70) aus einer Halterung (701), einem Behälterkörper (702), einem Haken (703), einer Auslassöffnung (704) und einem Ventil (705) besteht, und die Auslassöffnung (704) am Boden des Behälterkörpers (702) angeordnet ist und durch das Ventil (705) gesteuert wird, um geöffnet und geschlossen zu werden.

3. Das Hochsee- und Seeaquakultur-Doppelrumpfschiff nach Anspruch 1, wobei an der Oberseite der Rumpfkomponente (10) auf jeder Seite eine Längsführungsschiene angeordnet ist und eine erste Zahnstange (107) entlang der Längsführungsschiene angeordnet ist; die Längsbewegungskomponente (20) einen ersten Motor, eine erste Führungsnut an der Unterseite und eine seitlich fest verbundene Querführungsschiene umfasst; eine zweite Zahnstange (207) seitlich fest mit der Querführungsschiene verbunden ist; ein erstes Zahnrad in Antriebsverbindung mit einer Ausgangswelle des ersten Motors steht, das erste Zahnrad mit der ersten Zahnstange (107) kämmt und die erste Führungsnut verschiebbar mit der Längsführungsschiene verbunden ist;
die querbewegliche Komponente (30) einen zweiten Motor, mehrere Gruppen vertikal angeordneter erster Führungshülsen und eine zweite Führungsnut an der Unterseite umfasst; die erste Führungshülse vertikal mit der darüber liegenden Hubkomponente (40) verbunden ist, die zweite Führungsnut verschiebbar mit der querbeweglichen Führungsschiene der längsbeweglichen Komponente (20) verbunden ist, ein zweites Zahnrad in Antriebsverbindung mit einer Ausgangswelle des zweiten Motors steht und das zweite Zahnrad mit der zweiten Zahnstange (207) im Eingriff steht;
die Hebekomponente (40) einen Heberahmen (401) und einen dritten Motor umfasst, mehrere Gruppen von Führungssäulen (412) an der Unterseite des Heberahmens (401) angeordnet sind und zwei Gruppen von Führungsstangen innerhalb des Heberahmens (401) fest miteinander verbunden sind; zwei Enden einer linken und einer rechten Gleitstange jeweils fest mit einer Gleithülse verbunden sind und die Gleithülsen verschiebbar mit den Führungsstangen verbunden sind; eine bidirektionale Schraube fest mit einer Ausgangswelle des dritten Motors verbunden ist, die bidirektionale Schraube die linke und die rechte Gleitstange in einer Gewindeverbindung durchdringt und zwei Enden der bidirektionalen Schraube symmetrisch jeweils mit einem Rechtsgewinde und einem Linksgewinde versehen sind; ein elektrisches Hebezeug mit jeder Gleithülse verbunden ist und das elektrische Hebezeug über ein erstes Stahlkabel mit einer darunter liegenden Zugplatte verbunden ist; eine Vielzahl von vierten Motoren mit dem Hubrahmen (401) verbunden ist, die Ausgangswellen der vierten Motoren fest mit einer Hubspindel verbunden sind und die Hubspindel über ein Gewinde mit einer Hubmutter der querbeweglichen Komponente (30) verbunden ist; und eine Vielzahl von Gruppen von Teleskopstangen nacheinander verschachtelt und entlang einer axialen Mittellinie der ersten Führungshülse verbunden ist und die Oberseite jeder Teleskopstange fest mit der entsprechenden Führungssäule verbunden ist.

4. Das Hochsee- und Hochsee-Aquakultur-Doppelrumpfschiff nach Anspruch 1, wobei die bewegliche Riemenscheibenkomponente (504) mit einem Kabelhaken (5048) an einer Kabelhalterung (5043) versehen ist und ein zweites Stahlkabel (5041) um eine Riemenscheibe (5044) gewickelt ist, wobei ein Ende fest mit einer Befestigungsplatte (5042) und das andere Ende fest mit einem Kabelkopf (5047) verbunden ist; eine Riemenscheibenwelle (5045), die fest mit der Riemenscheibe (5044) verbunden ist, in einem Kabelhalterungsloch (5046) der Kabelhalterung (5043) gelagert ist und die Riemenscheibe (5044) drehbar mit der Riemenscheibenwelle (5045) verbunden ist; und der Kabelkopf (5047) fest mit dem oberen Raum (501) und das zweite Stahlkabel (5041) fest mit dem unteren Raum (502) verbunden ist.

5. Das Hochsee- und Fernsee-Aquakultur-Doppelrumpfschiff nach Anspruch 4, wobei der zweite Fischantriebsrahmen (506) an einer inneren Bodenfläche des unteren Raums (502) angeordnet ist, eine Vielzahl von zweiten Haken (5062) über zweite Stangen mit dem zweiten Fischantriebsrahmen (506) verbunden sind und die zweiten Haken (5062) nach außen ragen und sich über der Oberseite des oberen Raums (501) befinden;
der erste Fischfangrahmen (60), der am Boden jedes Abteils (102) angeordnet ist, vertikal mit ersten Haken (602) darüber durch erste Stangen (601) verbunden ist, und die ersten Haken (602) sich nach außen erstrecken und sich auf dem Oberdeck der Rumpfkomponente (10) befinden; und eine Innenseite des oberen Raums (501), eine Außenseite des unteren Raums (502) und die Oberseiten des ersten Fischfangrahmens (60) und des zweiten Fischfangrahmens (506) alle mit Fischernetzen bedeckt sind.

6. Das Hochsee- und Fernsee-Aquakultur-Doppelrumpfschiff nach Anspruch 1, wobei ein Ende des Sortierers (1091) mit den Kabinenfischauslässen (109) und das andere Ende mit den Fischzuchttank-Einlässen (5051) verbunden ist; und der Sortierer (1091) eine Vielzahl von Sortieröffnungen (1092) aufweist.

## Revendications

1. Navire à double coque pour l'aquaculture en haute mer et au large, comprenant des composants de coque (10) sur deux côtés, des réservoirs de culture (50) situés entre les composants de la coque (10) de manière suspendue, et un trieur (1091) reliant les composants de coque (10) aux réservoirs de culture (50) et transférant de manière directionnelle les poissons d'élevage des composants de coque (10) vers les réservoirs de culture (50) ; dans lequel
un mécanisme de levage mobile est disposé entre le haut des composants de la coque (10) sur deux côtés, le mécanisme de levage mobile comprend un composant de levage (40), un composant mobile longitudinal (20) et un composant mobile transversal (30) répartis le long des coques sur deux côtés, et le composant mobile longitudinal (20) a une structure de fond de cadre en forme de H ;
un dispositif de biofiltration pour la circulation de l'eau avec la zone maritime externe est disposé dans l'élément de coque (10) ;
dans lequel le navire à double coque pour l'aquaculture en haute mer et au large comprend en outre une pluralité de composants de poulie mobile (504) ;
le réservoir de culture (50) est composé d'un espace supérieur (501) et d'un espace inférieur (502) qui sont reliés, et le haut de l'espace supérieur est relié à la pluralité de composants de poulie mobile (504) ;
l'espace supérieur (501) est pourvu d'entrées de poissons de bassin d'élevage (5051) et de sorties de poissons de bassin d'élevage (5052) orientées vers les côtés de la coque sur deux côtés ;
une paroi latérale extérieure de l'espace supérieur (501) et une paroi latérale intérieure de l'espace inférieur (502) sont ajustés avec jeu ; à une position maximale déployée du réservoir de culture (50), une face d'extrémité supérieure d'un bossage extérieur reliée de manière fixe à l'espace supérieur (501) entre en contact et est reliée de manière fixe à une face d'extrémité inférieure d'un bossage intérieur de l'espace inférieur (502) ; lorsqu'elle est raccourcie verticalement à une hauteur minimale du réservoir de culture (50), une surface inférieure de l'espace supérieur (501) est en contact avec une surface inférieure intérieure de l'espace inférieur (502), et à ce stade, un premier trou (5022) de l'espace inférieur (502) et un troisième trou (5011) de l'espace supérieur (501) sont concentriques ;
une pluralité de compartiments fermés et isolés (102) sont disposés dans l'élément de coque (10), un cadre de séparation (106) est disposé entre les sommets des éléments de coque (10) sur deux côtés, et le cadre de séparation (106) a une pluralité d'encoches (1061) s'ouvrant vers le haut ;
un côté, faisant face au réservoir de culture (50), de l'élément de coque (10) est pourvu de sorties de poisson de cabine (109) et d'entrées de poisson de cabine (108) disposées horizontalement, et la sortie de poisson de cabine (109) et l'entrée de poisson de cabine (108) pénètrent à travers le cadre de cloison (106) ;
des dispositifs de collecte de poissons sont disposés au fond de chaque compartiment (102) de l'élément de coque (10) et au fond de chaque réservoir de culture (50), le dispositif de collecte de poissons comprenant un premier cadre de conduite du poisson (60) et un deuxième cadre de propulsion du poisson (506), le fond du compartiment (102) est pourvu du premier cadre de propulsion du poisson (60) et le fond de l'espace inférieur (502) est pourvu du deuxième cadre de conduite du poisson (506) ;
le transfert des poissons d'élevage est réalisé par la différence de niveau d'eau entre le compartiment (102) et le réservoir de culture (50) ;
dans lequel le navire à double coque pour l'aquaculture en haute mer et au large comprend en outre une pompe à eau ;
lorsque les poissons d'élevage sont transférés de la coque au réservoir de culture (50), les sorties de poissons de cabine (109) communiquent avec les entrées de poissons du bassin d'élevage (5051), l'eau de mer à l'extérieur du navire est injectée dans la coque à l'aide de la pompe à eau, de sorte que le niveau d'eau dans la cabine est plus élevé que celui de l'eau de mer externe, et le premier cadre de conduite du poisson (60) au fond du compartiment (102) se lève pour concentrer les poissons d'élevage à la partie supérieure de la coque et transférer les poissons d'élevage dans le réservoir de culture (50) ; et
lorsque les poissons d'élevage sont transférés du réservoir de culture (50) à la coque, les entrées de poissons de cabine (108) communiquent avec les sorties de poissons du réservoir d'élevage (5052), l'eau de mer dans la coque est pompée par la pompe à eau pour rendre le niveau d'eau dans la cabine inférieur à celui de l'eau de mer externe, et le deuxième cadre d'entraînement des poissons (506) au fond du réservoir de culture (50) s'élève pour concentrer les poissons d'élevage au niveau supérieur partie du réservoir de culture (50) et transférer les poissons d'élevage dans le compartiment (102).

2. Navire à double coque pour l'aquaculture en haute mer et au large selon la revendication 1, dans lequel une pluralité de bacs d'alimentation (70) sont disposés sur un pont supérieur de l'élément de coque (10), le bac d'alimentation (70) est composé d'un support (701), d'un corps de bac (702), d'un crochet (703), d'un orifice de décharge (704) et d'une soupape (705), et l'orifice de décharge (704) est disposé au fond du corps de bac (702) et commandé par la soupape (705) à ouvrir et à fermer.

3. Navire à double coque pour l'aquaculture en haute mer et au large selon la revendication 1, dans lequel un rail de guidage longitudinal est disposé au sommet de l'élément de coque (10) de chaque côté, et une première crémaillère (107) est disposée le long du rail de guidage longitudinal ; l'élément mobile longitudinal (20) comprend un premier moteur, une première rainure de guidage au bas et un rail de guidage transversal fixé sur le côté ; une deuxième crémaillère (207) est reliée de manière fixe sur le côté du rail de guidage transversal ; un premier engrenage est en liaison motrice avec un arbre de sortie du premier moteur, le premier engrenage s'engrène avec la première crémaillère (107) et la première rainure de guidage est reliée de manière coulissante au rail de guidage longitudinal ;
l'élément mobile transversal (30) comprend un deuxième moteur, une pluralité de groupes de premiers manchons de guidage disposés verticalement et une seconde rainure de guidage au bas ; le premier manchon de guidage est relié verticalement à l'élément de levage (40) au-dessus, la deuxième rainure de guidage est reliée de manière coulissante au rail de guidage transversal de l'élément mobile longitudinal (20), un deuxième engrenage est en liaison d'entraînement avec un arbre de sortie du deuxième moteur, et le deuxième engrenage s'engrène avec la deuxième crémaillère (207) ;
le composant de levage (40) comprend un cadre de levage (401) et un troisième moteur, une pluralité de groupes de colonnes de guidage (412) sont disposés au bas du cadre de levage (401), et deux groupes de tiges de guidage sont reliés de manière fixe à l'intérieur du cadre de levage (401) ; les deux extrémités d'une barre coulissante gauche et d'une barre coulissante droite sont chacune reliées de manière fixe par un manchon coulissant, et les manchons coulissants sont reliés de manière coulissante par glissière avec les tiges de guidage ; une vis bidirectionnelle est reliée de manière fixe à un arbre de sortie du troisième moteur, la vis bidirectionnelle pénètre à travers la barre coulissante gauche et la barre coulissante droite de manière à ce que la connexion soit filetée, et les deux extrémités de la vis bidirectionnelle sont pourvues symétriquement d'un filetage à droite et d'un filetage à gauche, respectivement ; un palan électrique est relié à chaque manchon coulissant, et le palan électrique est relié à une plaque de traction en dessous par un premier câble en acier ; une pluralité de quatrièmes moteurs sont reliés au cadre de levage (401), les arbres de sortie des quatrièmes moteurs sont reliés de manière fixe par une vis de levage, et la vis de levage est reliée par filetage à un écrou de levage de l'élément mobile transversal (30) ; et une pluralité de groupes de tiges télescopiques sont imbriqués et connectés séquentiellement le long d'une ligne médiane axiale du premier manchon de guidage, et le haut de chaque tige télescopique est relié de manière fixe à la colonne de guidage correspondante.

4. Navire à double coque pour l'aquaculture en haute mer et au large selon la revendication 1, dans lequel le composant de poulie mobile (504) est pourvu d'un crochet de câble (5048) sur un support de câble (5043), et un deuxième câble en acier (5041) est enroulé autour d'une poulie (5044), avec une extrémité reliée de manière fixe à une plaque de fixation (5042) et l'autre extrémité reliée de manière fixe à une tête de câble (5047) ; un arbre de poulie (5045) relié de manière fixe à la poulie (5044) est manchonné dans un trou de support de câble (5046) du support de câble (5043), et la poulie (5044) est reliée de manière tournante à l'arbre de poulie (5045) ; et la tête de câble (5047) est reliée de manière fixe à l'espace supérieur (501), et le deuxième câble d'acier (5041) est relié de manière fixe à l'espace inférieur (502).

5. Navire à double coque pour l'aquaculture en haute mer et au large selon la revendication 4, dans lequel le deuxième cadre de propulsion du poisson (506) est disposé sur une surface inférieure intérieure de l'espace inférieur (502), une pluralité de deuxièmes crochets (5062) sont reliés au deuxième cadre de propulsion du poisson (506) par des secondes tiges, et les seconds crochets (5062) s'étendent et sont situés au-dessus du haut de l'espace supérieur (501) ;
le premier cadre de propulsion du poisson (60) disposé au fond de chaque compartiment (102) est relié verticalement aux premiers crochets (602) situés au-dessus par les premières tiges (601), et les premiers crochets (602) s'étendent et sont situés sur le pont supérieur de l'élément de coque (10) ; et une face intérieure de l'espace supérieur (501), une face extérieure de l'espace inférieur (502) et les surfaces supérieures du premier cadre de conduite du poisson (60) et du deuxième cadre de conduite du poisson (506) sont toutes recouvertes de filets de pêche.

6. Navire à double coque pour l'aquaculture en haute mer et au large selon la revendication 1, dans lequel une extrémité de la trieuse (1091) est reliée aux sorties de poisson de cabine (109), et l'autre extrémité est reliée aux entrées de poissons du bassin d'élevage (5051) ; et le trieur (1091) dispose d'une pluralité d'orifices de tri (1092).
